# EUROPÄISCHE PATENTSCHRIFT

(11) **EP 1 511 587 B1**
(45) Veröffentlichungstag und Bekanntmachung des Hinweises auf die Patenterteilung: **25.01.2006**
(21) Anmeldenummer: 03717164.2
(22) Anmeldetag: 03.04.2003
(51) Int. Cl.: B21D 43/00, B21D 3/04, B23Q 7/00

(54) **EINLAUFKANAL FÜR EINE RICHTMASCHINE**
FEEDING DUCT FOR A STRAIGHTENING MACHINE
CANAL ADDUCTEUR POUR DRESSEUSE

(30) Priorität: 17.05.2002 DE 10221986
(43) Veröffentlichungstag der Anmeldung: 09.03.2005
(73) Patentinhaber: BL Chemie GmbH & Co. KG, 58809 Neuenrade (DE)
(72) Erfinder: Bültmann, Rudolf, 58809 Neuenrade (DE)
(74) Vertreter: Graefe, Jörg
(86) Internationale Anmeldenummer: PCT/DE2003/001088
(87) Internationale Veröffentlichungsnummer: WO 2003/097270

(56) Entgegenhaltungen:
- EP-A- 0 010 597
- WO-A-84/03060
- DE-A- 1 914 647
- DE-A- 19 711 951
- GB-A- 630 341

## Beschreibung

Die vorliegende Erfindung betrifft eine Vorrichtung zum Einführen von rotierenden Stangen oder Rohren in eine Bearbeitungsmaschine insbesondere eine Richtmaschine mit Mitteln, die einen Einführkanal ausbilden.

Eine derartige Vorrichtung ist aus der Druckschrift DE 197 11 952 A1 und der Druckschrift DE PS 965 194 bekannt. Das den Einführkanal bildende Mittel ist in beiden Druckschriften ein Blech welches so gebogen ist, dass sich im Querschnitt die Form einer Spirale ergibt, deren Windung von außen nach innen im Drehsinn der in dem Einführkanal rotierenden Stangen oder Rohre verläuft.

Die Formung eines derartigen Bleches ist technologisch schlecht, weil der Kanalquerschnitt nicht verändert werden kann.

Der Erfindung liegt daher die Aufgabe zugrunde, eine Vorrichtung zum Einführen von rotierenden Stangen oder Rohren in eine Bearbeitungsmaschine vorzuschlagen, welche einfache Mittel aufweist, welche einen Einführkanal ausbilden. Die Mittel sollen dabei möglichst auf dem Markt erhältliche Standardmittel sein.

Diese Aufgabe wird erfindungsgemäß dadurch gelöst, dass die den Einführkanal ausbildenden Mittel vier Vierkant-Rechteck-Profilteile sind. Die Innenseite des Einführkanals dabei durch jeweils einen ersten Abschnitt einer Ersten Längsseite jedes Vierkant-Rechteck-Profilteils ausgebildet.

Die eingangs genannte Druckschrift DE 197 11 952 A1 offenbart ferner ein Einführkanal, dessen Querschnitt veränderbar ist. So lassen sich zum einen Güter mit verschiedenen Querschnitten oder mit großer Welligkeit sowie auch Güter mit kleineren Querschnitten oder geringerer Welligkeit richten. Auch lässt sich der Querschnitt während des Einführvorganges verkleinern, um so bei Gütern mit großer Welligkeit die Welligkeit sukzessiv auf eine Welligkeit zu reduzieren, die problemlos von einer im Anschluss an die Vorrichtung vorgesehenen Richtmaschine gerichtet werden kann. Eine solche Veränderbarkeit des Querschnitts des Einführkanals kann gemäß der Erfindung dadurch erreicht werden, dass zumindest drei der vier Vierkant-Rechteck-Profilteile in zumindest eine Querrichtung vorzugsweise jedoch in beide Querrichtungen verschiebbar angeordnet sind. Die Vierkant-Rechteck-Profilteile können dabei auch derart in beide Querrichtungen verschiebbar sein, dass die überlagerte Verschiebung in Querrichtung eine Bewegung der Rechteck-Profilteile ergibt, die in einem Winkel zwischen dem durch die beiden Querrichtungen aufgespannten Winkel liegt. Die Richtung der überlagerten Bewegungen kann den Vierkant-Rechteck-Profilteilen auch durch entsprechende Führungen aufgezwungen sein, wobei die Vierkant-Rechteck-Profilteile in diesen Führungen verschiebbar gelagert sind.

Gemäß der Erfindung können die Vierkant-Rechteck-Profilteile mit einem zweiten Abschnitt der Ersten Längsseite an einer zweiten Längsseite an einem benachbarten Vierkant-Rechteck-Profilteil anliegen. Der Anteil des ersten Abschnitts und des zweiten Abschnitts an der ersten Längsseite eines jeden Vierkant-Rechteck-Profilteils kann durch Verschieben der Rechteck-Vierkant-Profilteile einstellbar sein.

Gemäß der Erfindung können die Vierkant-Rechteck-Profilteile hohl sein, wobei der Hohlraum vorzugsweise mit Sand gefüllt ist. Durch diese Sandfüllung werden die durch das zu Richtende Gut auf die Innenwände des Richtkanals erfolgende Schläge akustisch gedämpft.

Weitere Merkmale und Vorteile der vorliegenden Erfindung werden deutlich anhand der nachfolgenden Beschreibung eines bevorzugten Ausführungsbeispiels unter Bezugnahme auf die beiliegenden Abbildungen. Darin zeigt
- Fig. 1: einen schematischen Querschnitt durch eine erfindungsgemäße Vorrichtung und
- Fig. 2: die Vorrichtung gemäß Fig. 1 jedoch mit größerem Querschnitt des Einführkanals.

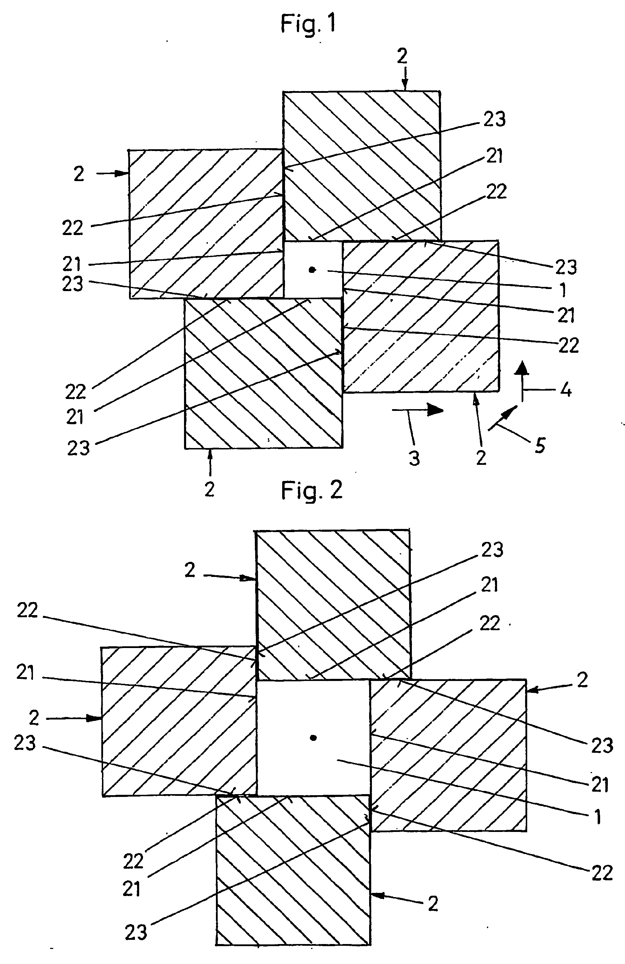

Die in Fig. 1 und Fig. 2 dargestellte Vorrichtung wird im wesentlichen durch vier Vierkant-Rechteck-Profilteile 2 gebildet. Jedes dieser vier Vierkant-Rechteck-Profilteile 2 weist eine erste Längsseite 21, 22 und eine zweite Längsseite 23 auf. Die erste und die zweite Längsseite stehen dabei senkrecht zueinander und haben eine gemeinsame Kante. Die erste Längsseite 21, 22 weist einen ersten Abschnitt 21 und einen zweiten Abschnitt 22 auf. Die ersten Abschnitte 21 der vier Vierkant-Rechteck-Profilteile 2 bilden den Einführkanal 1 der Vorrichtung aus. Der Einführkanal 1 ist im Querschnitt quadratisch, wobei die ersten Abschnitte 21 der Vierkant-Rechteck-Profilteile 2 die Kanten dieses Quadrats ausbilden. Die zweiten Abschnitte 22 der ersten Längsseite 21, 22 eines jeden Vierkant-Rechteck-Profilteils 2 liegt an der zweiten Längsseite 23 eines benachbarten Vierkant-Rechteck-Profilteils 2 an.

Jedes der Vierkant-Rechteck-Profilteile 2 ist in seine Querrichtungen verschiebbar angeordnet. Dieses ist durch die Pfeile 3 und 4 für eines der Vierkant-Rechteck-Profilteile 2 angedeutet. Durch eine Überlagerung der Bewegungen in die Richtungen 3 und 4 ergibt sich eine Bewegung, die innerhalb des durch die Richtungen 3 und 4 aufgespannten Winkels liegt. Diese Resultierende ist durch den Pfeil 5 angegeben. Durch eine gleichzeitige und gleichartige Bewegung der 4 Vierkant-Rechteck-Profilteile 2, ergibt sich, dass die Vierkant-Rechteck-Profilteile 2 so bewegt werden, dass die aneinanderliegende erste Längsseite 21, 22 des einen Vierkant-Rechteck-Profilteils 2 in ständigen Kontakt mit der zweiten Längsseite 23 des benachbarten Vierkant-Rechteck-Profilteils 2 bleibt. Der geschlossene Einführkanal bleibt erhalten, sein Querschnitt wird jedoch durch das Auseinanderfahren der Vierkant-Rechteck-Profilteile 2 vergrößert. Durch das Auseinanderfahren der vier Vierkant-Rechteck-Profilteile 2 wird auch der Anteil des ersten Abschnitts 21 an der ersten Längsseite 21, 22 eines jeden Vierkant-Rechteck-Profilteils 2 zwei auf Kosten des jeweiligen zweiten Abschnitts 23 vergrößert.

## Patentansprüche

1. Vorrichtung zum Einführen von rotierenden Stangen oder Rohren in eine Bearbeitungsmaschine insbesondere eine Richtmaschine, mit Mitteln, die einen Einführkanal (1) ausbilden,
**dadurch gekennzeichnet,**
**dass** die den Einführkanal (1) ausbildenden Mittel vier Vierkant-Rechteck-Profilteile (2) sind und dass jeweils ein erster Abschnitt (21) einer ersten Längsseite (21, 22) jedes Vierkant-Rechteck-Profilteils eine Innenseite des Einführkanals (1) ausbildet.

2. Vorrichtung nach Anspruch 1, **dadurch gekennzeichnet, dass** zumindest drei Vierkant-Rechteck-Profilteile (2) in zumindest einer Querrichtung (3, 4) verschiebbar angeordnet sind.

3. Vorrichtung nach einem der Ansprüche 1 oder 2, **dadurch gekennzeichnet, dass** die Vierkant-Rechteck-Profilteile (2) mit einem zweiten Abschnitt (22) der ersten Längsseite (21, 22) an einer zweiten Längsseite (23) eines benachbarten Vierkant-Rechteck-Profilteils (2) anliegt.

4. Vorrichtung nach Anspruch 3, **dadurch gekennzeichnet, dass** die Anteile der ersten Abschnitte (21) und der zweiten Abschnitte (22) an den ersten Längsseiten (21, 22) durch Verschieben der Vierkant-Rechteck-Profilteile (2) einstellbar sind.

5. Vorrichtung nach einem der Ansprüche 1 bis 4, **dadurch gekennzeichnet, dass** die Vierkaut-Rechteck-Profilteile (2) hohl sind und der Hohlraum mit Sand gefüllt ist.

## Claims

1. Device for feeding rotating rods or tubes into a processing machine, in particular a straightening machine, having means which form a feeding duct (1), **characterized in that** the means forming the feeding duct (1) are four square/rectangular profile parts (2), and **in that** in each case a first section (21) of a first longitudinal side (21, 22) of each square/rectangular profile part forms an inner side of the feeding duct (1).

2. Device according to Claim 1, **characterized in that** at least three square/rectangular profile parts (2) are arranged so as to be displaceable in at least one transverse direction (3, 4).

3. Device according to either of Claims 1 and 2, **characterized in that** the square/rectangular profile parts (2) bear with a second section (22) of the first longitudinal side (21, 22) against a second longitudinal side (23) of an adjacent square/rectangular profile part (2).

4. Device according to Claim 3, **characterized in that** proportions of the first sections (21) and of the second sections (22) on the first longitudinal sides (21, 22) can be set by displacing the square/rectangular profile parts (2).

5. Device according to one of Claims 1 to 4, **characterized in that** the square/rectangular profile parts (2) are hollow and the cavity is filled with sand.

## Revendications

1. Dispositif pour introduire des barres ou des tubes rotatifs dans une machine d'usinage, notamment une dresseuse, comprenant des moyens qui constituent un canal adducteur (1),
**caractérisé en ce que**
les moyens constituant un canal adducteur (1) sont quatre des pièces profilées rectangulaires tétraédriques (2) et **en ce qu'**à chaque fois une première portion (21) d'un premier côté longitudinal (21, 22) de chaque pièce profilée rectangulaire tétraédrique constitue un côté interne du canal adducteur (1).

2. Dispositif selon la revendication 1, **caractérisé en ce qu'**au moins trois pièces profilées rectangulaires tétraédriques (2) sont disposées de manière à pouvoir se déplacer dans au moins une direction transversale (3, 4).

3. Dispositif selon l'une quelconque des revendications 1 ou 2, **caractérisé en ce que** les pièces profilées rectangulaires tétraédriques (2) s'appliquent avec une deuxième portion (22) du premier côté longitudinal (21, 22) contre un deuxième côté longitudinal (23) d'une pièce profilée rectangulaire tétraédrique adjacente (2).

4. Dispositif selon la revendication 3, **caractérisé en ce que** les proportions des premières portions (21) et des deuxièmes portions (22) sur les premiers côtés longitudinaux (21, 22) peuvent être ajustées par déplacement des pièces profilées rectangulaires tétraédriques (2).

5. Dispositif selon l'une quelconque des revendications 1 à 4, **caractérisé en ce que** les pièces profilées rectangulaires tétraédriques (2) sont creuses et l'espace creux est rempli de sable.
